Europäisches Patentamt

European Patent Office

Office européen des brevets

(19)

(11) Veröffentlichungsnummer: **0 248 045**
**B1**

(12) EUROPÄISCHE PATENTSCHRIFT

(45) Veröffentlichungstag der Patentschrift: **14.03.90**

(21) Anmeldenummer: **86906789.2**

(22) Anmeldetag: **02.12.86**

(86) Internationale Anmeldenummer:
**PCT/DE86/00493**

(87) Internationale Veröffentlichungsnummer:
**WO 87/03578 18.06.87 Gazette 87/13**

(51) Int. Cl.⁵: **C 04 B 26/02,** C 04 B 38/00,
E 04 F 15/12

(54) **VERFAHREN ZUR HERSTELLUNG EINES GEGEBENENFALLS SCHWIMMENDEN FUSSBODENBELAGES.**

(30) Priorität: **06.12.85 DE 3543184**
**06.02.86 DE 3603664**

(43) Veröffentlichungstag der Anmeldung:
**09.12.87 Patentblatt 87/50**

(45) Bekanntmachung des Hinweises auf die
Patenterteilung:
**14.03.90 Patentblatt 90/11**

(84) Benannte Vertragsstaaten:
**AT BE CH FR GB IT LI LU NL SE**

(56) Entgegenhaltungen:
**CH-A- 457 798**
**DE-A-1 504 261**
**DE-A-1 927 576**
**FR-A-2 437 478**
**GB-A-1 367 527**

**Die Akte enthält technische Angaben, die nach
dem Eingang der Anmeldung eingereicht
wurden und die nicht in dieser Patentschrift
enthalten sind.**

(73) Patentinhaber: **RANG K.G. Haus moderner
Fussböden
Schillerstrasse 68
D-7906 Blaustein (DE)**

(72) Erfinder: **RANG, Klaus
Schillerstrasse 68
D-7906 Blaustein (DE)**

(74) Vertreter: **Dziewior, Kurt, Dr.-Ing.
Hermann Stehr-Weg 21
D-7900 Ulm/Donau (DE)**

**Beschreibung**

Die Erfindung betrifft ein Verfahren zur Herstellung eines Fußbodenbelages, insbesondere eines solchen Belages für den privaten und gewerblichen Bereich. Es ist dabei an Fußböden in Wohnräumen, Küchen, Bädern, aber auch Terrassen und Balkonen gedacht. Im gewerblichen Bereich wird an Fabrikations-, Lager- und Verkaufsräume gedacht, aber auch an Arztpraxen, Krankenhäuser, Schul- und Sporträume und dergl.

Bekannt ist ein Verfahren zur Herstellung eines solchen Fußbodenbelages, bei dem zunächst ein Granulat und ein aushärtbares Kunststoff-Bindemittel zu einer pastenförmigen Masse vermischt, diese Masse anschließend auf der zu belegenden Fläche gleichmäßig verteilt und dann geglättet wird. Nach dem Aushärten dieser Masse ergibt sich ein Fußbodenbelag, der aufgrund seiner Oberflächenbeschaffenheit fast keine Pflege erfordert. Bei dem bekannten Verfahren besteht das Granulat aus Quarzkieseln mit einem Durchmesser von einigen Millimetern.

Da dieser bekannte Fußbodenbelag nach seinem Aufbringen auf den Untergrund diesen vollständig und dicht abschließt, ist es erforderlich, daß das Aufbringen des Belages erst dann erfolgt, wenn dieser Untergrund vollkommen trocken ist. Nun werden aber in der Bautechnik Fußböden oft schon dann verlegt, wenn der Untergrund, z. B. ein Estrich, noch nicht ausreichend ausgetrocknet ist. Aus zeitlichen Gründen kann nicht immer so lange gewartet werden bis eine hinreichende Austrocknung erfolgt ist. Wird der bekannte Belag auf einen solchen noch nicht ausreichend ausgetrockneten Untergrund aufgebracht, so entstehen wegen des aufsteigenden Dampfes aus dem Untergrund in kurzer Zeit Blasen und Sprünge, so daß die zunächst vorhandene gleichmäßige und glatte Oberfläche des Bodenbelages verloren geht.

Aus GB—A—1,367,527 ist es bekannt, Baumaterialien, einschließlich solcher, die für Fußböden geeignet sind, dadurch herzustellen, daß man granulierten Zuschlagstoff mit einem thermoplastischen Bindemittel beschichtet, das beschichtete, noch lose Granulat in eine Form bringt und soweit erhitzt, bis zwischen den Berührflächen der Teilchen eine Bindung entsteht, um so einen porösen, lediglich jeweils an den Kontaktstellen der einzelnen Teilchen gebundenen Körper zu erhalten.

Aus DE—A—1,927,576 ist ein Verfahren zur Herstellung von Baumaterial bekannt, nach dem Zuschlagstoffe in Granulatform, insbes. auch Rundkies von 3 mm bis 6 mm Durchmesser mit einem Kunststoffbindemittel filmartig umhüllt und das Bindemittel derart ausgehärtet wird, daß nach dem Aushärten an den Berührungsstellen der einzelnen partikel eine stellenweise, insbesondere punktförmige Verklebung entsteht. Ein derartiges Material wird auch analog einer Estrichverlegung zur Herstellung von Böden empfohlen.

Schließlich ist aus CH—A—457 798 ein Verfahren zur Erstellung eines Unterlagbodens bekannt, bei dem unter Zuhilfenahme einer Betonmischmaschine zunächst ein trockener Rundkies mit einer unmittelbar davor angefertigten Mischung eines Kunstharzes mit dem dazu passenden Härter umhüllt wird. Auf 100 kg Rundkies sollen, je nach Körnung desselben und je nach verlangter Druckfestigkeit des zu erstellenden Unterlagbodens 1 bis 2 kg Kunstharz-Härter-Mischung verwendet werden. Dieses vom Betonmischer ausgeleerte zähflüssige Agglomerat soll dann sogleich auf die zu belegende Fläche durch Aufschütten und Verteilen aufgebracht, aber nicht verdichtet werden. Auch bei diesem bekannten Verfahren sollen benachbarte Kieskörner nur mit Bruchteilen der Oberfläche der sie umhüllenden Kunstharzschicht miteinander verbunden werden, so daß zwischen ihnen möglichst viele luftgefüllte Hohlräume unausgefüllt bleiben. Zur Erzielung einer größeren Druckfestigkeit wird empfohlen, eine untere Schicht mit grober Körnung und eine obere mit feinerer Körnung aufzubringen und darüber an der Oberfläche eine Mischung von Quarzsand und von Kunstharz-Bindemittel aufzuspachteln.

Die der Erfindung zugrunde liegende Aufgabe besteht nun darin, einen Fußbodenbelag herzustellen, der einerseits eine gewisse Dampfdurchlässigkeit aufweist, um auch auf noch nicht hinreichend ausgetrocknetem Untergrund aufgebracht werden zu können, und der andererseits auch eine ausreichende mechanische Festigkeit aufweist, um beispielsweise einer mechanischen Belastbarkeit eines Industriefußbodens zu genügen.

Zur Lösung dieser Aufgabe wird von dem bekannten Verfahren ausgegangen, bei dem zunächst ein Granulat und ein aushärtbares Kunststoff-Bindemittel derart zu einer pastenförmigen Masse vermischt werden, daß die einzelnen Körner des Granulats unter Bildung von Hohlräumen nur punktförmig aneinanderhaften und daß dann diese Masse auf der zu belegenden Fläche gleichmäßig verteilt und anschließend geglättet wird.

Gemäß der Erfindung werden das Mischungsverhältnis von Granulat und Bindemittel und gegebenenfalls die Korngröße des Granulats derart gewählt, daß nach dem Auftragen und Glätten der Masse durch an den Körnern herunterlaufendes Bindemittel zum Zeitpunkt der Reaktion die zu belegende Fläche in Folge der vorhandenen Hohlräume zwischen den einzelnen von dem Bindemittel benetzten Körnern des Granulats zu 40 bis 70 % vorzugsweise zu 50 %, von dem Bindemittel nicht benetzt wird. Zur Erhöhung der mechanischen Festigkeit und damit der mechanischen Belastbarkeit des aufgebrachten und ausgehärteten Belages wird dann in einem zweiten Arbeitsgang eine zweite Schicht aus einem wasseremulgierbaren Kunstharz, dem hydraulische Bindemittel beigemischt werden, z. B. gefüllte Kunstharze oder hydraulische Mörtelmischungen, aufgebracht.

Bei Verwendung eines Zwei-Komponenten-Reaktionsharzes als Bindemittel für die Mischung, nämlich eines lösungsmittelfreien Zwei-Komponenten Epoxydharzes oder Polyurethanharzes (lösungsmittelhaltig oder -frei) mit einer Zusammensetzung aus verschiedenen Härtersystemen ist es gelungen, durch genaue Abstimmung des Bindemittel-Anteiles im Verhältnis zur Korngröße des Granulats durch am Korn herunterlaufendes Harz zum Zeitpunkt der Reaktion eine Verbindung zum Untergrund zu erhalten. Dieses herunterlaufende Harz reicht aber nicht aus, um die Untergrundfläche vollkommen zu benetzen, wodurch eine Verbindung des Belages zum Untergrund entsteht, die dampfdurchlässig ist. Das beim bekannten Verfahren erwähnte Entstehen von Blasen und das damit verbundene Abplatzen des Belages vom Untergrund ist nun nicht mehr zu befürchten.

Durch die zweite aufgebrachte, der Festigkeitserhöhung dienende Schicht aus einem wasseremulgierbaren Kunststoff, dem hydraulische Bindemittel beigemischt werden, werden zwar die beim ersten Arbeitsgang verbliebenen Hohlräume des Belages vollständig ausgefüllt. Bei Verwendung von hydraulischen Füllmassen ist jedoch gewährleistet, daß die Dampfdurchlässigkeit des Bodenbelages nach wie vor erhalten bleibt, obwohl durch die Füllung der Hohlräume eine Erhöhung der Druck- und Biegezugfestigkeit erreicht worden ist.

Bei Anwendung der Erfindung zur Herstellung eines schwimmenden Belages, wobei auf den Untergrund zunächst eine Trennschicht aufgebracht wird, die z. B. aus Kunststoff-Folien, Kunststoff-Vliesen, Papier- oder Pappschichten bestehen kann, ist man unabhängig von dem Zustand des zu belegenden Untergrundes. Man kann den Belag ohne die bisher erforderlichen Vorarbeiten, die beispielsweise dann erforderlich waren, wenn der Untergrund teilweise mit Rissen durchzogen ist und keine feste Oberfläche aufweist, aufbringen.

Bisher war es auch nicht möglich, eine schwimmende Verlegung mit Materialien in geringen Schichtdicken ab etwa 8 mm durchzuführen. Die Eigenspannung der bisher bekannten Materialien führte bei loser Verlegung auf Trennschichten immer zu Aufwölbungen und zu Spannungsrissen. Durch die nur punktweise Verklebung der einzelnen Granulatkörnchen miteinander und mit der Trennschicht kommt es jedoch nicht zu Schwundspannungen. Der Belag bleibt vielmehr vollkommen spannungsfrei auf der Trennlage liegen.

Wenn man nun die Dicke der aufzutragenden Schicht auf das Doppelte (ca. 15 mm) oder das Dreifache (ca. 20 bis 25 mm) erhöht, erzielt man eine selbsttragende Konstruktion, ähnlich einem schwimmenden Estrich. Während letztere wegen ihrer Schwundspannungen gewisse Mindestdicken aufweisen müssen, können nach dem erfindungsgemäßen Verfahren hergestellte Beläge diese Werte weit unterschreiten. Daher bietet das erfindungsgemäße Verfahren die Möglichkeit, anstelle von einfachen Trennfolien auch Isoliermaterialien in Form von Kork, extrudiertem Polystirolschaum, Polyurethanschaum oder ähnlichen als Wärmedämmung unter den Belag zu legen. Dieser Vorteil ist insbesondere bei der Altbau-Renovierung wichtig, wo oft nicht ausreichende Konstruktionshöhe zur Verfügung steht.

Bei Anwendung des erfindungsgemäßen Verfahrens ist es auch möglich, den Belag mit unterschiedlichen Dicken aufzutragen, was nach den bisher bekannten Verfahren wegen des Auftretens unterschiedlicher Spannungen unweigerlich zu Rißbildungen führen würde.

Als Granulat können bei dem erfindungsgemäßen Verfahren ebenfalls Quarzkiesel oder aber Marmorsplit, Metall-Kugeln oder Granulate sowie andere Materialien wie Porzellan, Glas, Kunststoff, Ziegel oder Recycling Materialien mit einer Korngröße zwischen 2 und 10 mm verwendet werden.

Einen besonders ansprechenden Bodenbelag erhält man bei Verwendung eines Granulats aus Kugeln gleichen oder annähernd gleichen Durchmessers, die aus Metall, vorzugsweise aus Stahl, Glas oder Kunststoff bestehen können.

Auch diese Kugeln Können einen Durchmesser zwischen 2 und 10 mm aufweisen.

Bei dieser Granulatform erreicht man eine sehr gleichmäßige Benetzung der Granulatteilchen und des Untergrundes durch das am Kugelumfang herablaufende Bindemittel und somit eine gleichmäßige Verteilung der bindemittelfreien Stellen des Untergrundes oder der Trennschicht.

Die Verwendung von Kügelchen oder Granulat hat gleichzeitig noch weitere Vorteile. Durch verschiedenartige Einfärbung der Kugeln oder des Granulats kann man bestimmte Muster des Fußbodenbelages erzeugen, wodurch man beliebig variierbare optische Wirkungen erreichen kann.

Abschließend sei nochmals darauf hingewiesen, daß zur Durchführung des erfindungsgemäßen Verfahrens als Granulat beliebige Materialien wie die bereits erwähnten Quarzkiesel oder Marmorsplit, aber auch Porzellan, Schmelzprodukte, Holz, Glas, Kunststoffe, Gummi, Metalle, Recycling-Materialien und Ton verwendbar sind.

**Patentansprüche**

1. Verfahren zur Herstellung eines gegebenenfalls schwimmenden Fußbodenbelags, insbes. für den privaten und gewerblichen Bereich, bei dem zunächst ein Granulat und ein aushärtbares Kunststoff-Bindemittel derart zu einer pastenförmigen Masse vermischt werden, daß die einzelnen Körner des Granulats unter Bildung von Hohlräumen nur punktförmig aneinanderhaften und daß dann diese Masse auf der zu belegenden Fläche gleichmäßig verteilt und anschließend geglättet wird, dadurch gekennzeichnet, daß das Mischungsverhältnis von Granulat und Bindemittel und gegebenenfalls die Korngröße des Granulats derart gewählt werden, daß nach dem Auftragen und Glätten der Masse durch an den Körnern herunterlaufendes Bindemittel zum Zeitpunkt der Reaktion die zu belegende Fläche infolge der vorhandenen Hohlräume zwischen den einzelnen von dem Bindemittel benetzten Körnern des Granulats zu 40 bis 70 %, vorzugsweise zu 50 %, von dem Bindemittel nicht benetzt wird und daß in einem zweiten Arbeitsgang zur Erhöhung der mechanischen Festigkeit und damit der mechanischen Belastbarkeit des aufgebrachten und ausgehärteten Belages auf diesen eine zweite Schicht aus einem wasseremulgierbaren Kunstharz, dem hydraulische Bindemittel beigemischt werden, z. B. gefüllte Kunstharze oder hydraulisch abbindende Massen aufgebracht wird.

2. Verfahren nach Anspruch 1, dadurch gekennzeichnet, daß als Granulat Quarzkiesel oder Metallgranulat mit einer Korngröße zwischen 2 und 10 mm verwendet werden.

3. Verfahren nach Anspruch 1, dadurch gekennzeichnet, daß als Granulat Kugeln gleichen oder annähernd gleichen Durchmessers aus Metall, vorzugsweise Stahl, Glas oder Kunststoff mit einem Durchmesser zwischen 2 und 10 mm verwendet werden.

4. Verfahren nach Anspruch 1 bis 3, dadurch gekennzeichnet, daß die zu belegende Fläche vor dem Aufbringen der pastenförmigen Masse mit einer Trennschicht oder Isoliermaterialien in Form von Kork, extrudiertem Polystyrolschaum, Polyurethanschaum oder ähnlichem als Wärmedämmung belegt wird.

5. Verfahren nach Anspruch 3 und 4, dadurch gekennzeichnet, daß der Belag in einer Schichtdicke von minimal 8 mm aufgebracht wird.

## Revendications

1. Procédé de fabrication d'un revêtement de sol éventuellement flottant, en particulier d'un revêtement pour les secteurs privé et commercial, qui consiste à mélanger tout d'abord en une masse pâteuse un granulé et un liant plastique durcissable de telle façon que les différents grains du granulé n'adhèrent les uns aux autres que de manière ponctuelle, avec formation de cavités, et que cette masse est ensuite répartie régulièrement sur la surface à recouvrir, puis lissée, caractérisé en ce que le rapport de mélange du granulé et du liant et éventuellement la grosseur des grains du granulé sont choisis de telle façon que, après l'application et le lissage de la masse, 40 à 70 %, de préférence 50 % de la surface à recouvrir ne sont pas mouillés au moment de la réaction par le liant coulant le long des grains du fait de la présence des cavités entre les différents grains du granulé mouillés par le liant, et que pour augmenter la résistance mécanique et par conséquent la capacité de charge mécanique du revêtement appliqué et durci, une deuxième couche constituée d'une résine synthétique soluble dans l'eau additionnée de liants hydrauliques, par exemple de résines synthétiques chargées ou de mélanges de masses à prise hydraulique, est appliquée sur ledit revêtement dans une deuxième opération.

2. Procédé selon la revendication 1, caractérisé en ce qu'il met en oeuvre comme granulés des graviers siliceux ou des granulés métalliques d'une grosseur des grains comprise entre 2 et 10 mm.

3. Procédé selon la revendication 1, caractérisé en ce qu'il met en oeuvre comme granulés des billes d'un diamètre identique ou approximativement identique en métal, de préférence en acier, en verre ou en matière plastique avec un diamètre compris entre 2 et 10 mm.

4. Procédé selon l'une des revendications 1 à 3, caractérisé en ce que la surface à recouvrir est recouverte, avant l'application de la masse pâteuse, d'une couche de séparation ou de matières isolantes sous forme de liège, de mousse de polystyrène extrudée, de mousse de polyuréthane ou analogues, en tant qu'isolation thermique.

5. Procédé selon l'une des revendications 3 et 4, caractérisé en ce que le revêtement est appliqué en une épaisseur de couche minimale de 8 mm.

## Claims

1. A process for the production of a possibly floating flooring, in particular for the private and commercial sectors, in which firstly a granulate material and a hardenable plastics binding agent are mixed to form a pasty mass in such a way that the individual grains of the granulate material cling together only in a punctiform manner forming hollow spaces and that said mass is then uniformy distributed over the surface to be covered and then smoothed, characterised in that the ratio with which the granulate material and the binding agent are mixed and possibly the grain size of the granulate material are so selected that, after application and smoothing of the mass, due to binding agent running down at the grains, at the time of the reaction, the surface to be covered is not wetted by the binding agent to from 40 to 70%, preferably 50%, as a result of the hollow spaces present between the individual grains of the granulate material which are wetted by the binding agent, and that in a second working operation to increase the mechanical strength and thus the mechanical load-bearing capacity of the applied and hardened coating, there is applied thereto a second layer of a water-emulsifiable synthetic resin to which are added hydraulic binding agents, for example filled synthetic resins or hydraulically setting materials.

2. A process according to claim 1 characterised in that the granulate material used is quartz gravel or metal granulate of a grain size of between 2 and 10 mm.

3. A process according to claim 1 characterised in that the granulate material used is balls of the same or approximately the same diameter of metal, preferably steel, glass or plastics material, of a diameter of between 2 and 10 mm.

4. A process according to claim 1 to 3 characterised in that the surface to be covered, prior to the application of the pasty mass is covered with a separating layer or insulating materials in the form of cork, extruded polystyrene foam, polyurethane foam or the like as a heat barrier.

5. A process according to claim 3 and claim 4 characterised in that the covering is applied in a layer of a minimum thickness of 8 mm.